# EUROPEAN PATENT APPLICATION

(11) **EP 1 931 067 A2**
(43) Date of publication of application: **11.06.2008**
(21) Application number: 07122076.8
(22) Date of filing: 03.12.2007
(51) Int. Cl.: H04H 60/72, H04H 60/65

(54) **Method and apparatus for collecting user interest information**

(30) Priority: 07.12.2006 KR 20060123547
(71) Applicant: Samsung Electronics Co., Ltd., Suwon-si, Gyeonggi-do (KR)
(72) Inventor: Lee, Je Geol, Gyeonggi-do (KR); Seo, Jeong Wook, Gyeonggi-do (KR)
(74) Representative: Grünecker, Kinkeldey, Stockmair & Schwanhäusser Anwaltssozietät

(57) **Abstract**

A user interest information-collecting method and apparatus of the present invention are provided for collecting user interest information on the basis of program viewing-behavior patterns of a user. The user interest information-collecting method includes extracting program guide information from a digital broadcast data received by the digital broadcast receiver; classifying by keyword information items contained in the program guide information; selecting at least one of the information items as user interest fields on the basis of user-viewing history; retrieving relevant information items of the user interest fields; and designating at least one of retrieved relevant information items selected by the user as user interest information item.

## Description

### BACKGROUND OF THE INVENTION

### 1. Field of the Invention

The present invention relates to a digital broadcast enabled mobile terminal and, in particular, to a method and apparatus for collecting user interest information.

### 2. Description of the Related Art

With the commercialization of digital broadcasting such as Digital Multimedia Broadcasting (DMB) and Digital Video Broadcasting Handheld (DVB-H), mobile terminals equipped with digital broadcast receivers have become common such that subscribers can watch television programs provided on the move.

The digital broadcasting allows more information and data to be aired on the service channels multiplexed in a frequency band. Typically, each service channel is composed of broadcast data channels and a program information channel.

The program information channel is commonly referred to as an Electronic Program Guide (EPG) channel for DMB and an Electronic Service Guide (ESG) channel for DVB-H.

However, the program information is so great in volume that it is not easy for the user to efficiently use the program information. Particularly, retrieving user interest information from the voluminous program information is laborious. For example, the subscribers are faced with how to search and browse programs relevant to specific items such as clothes and accessories with the program information.

For this reason, there is a need for a user interest information-collecting technique capable of collecting and classifying user preference information.

### SUMMARY OF THE INVENTION

The present invention has been made in an effort to solve at least the above problems, and the present invention provides a method and apparatus for collecting user interest information on the basis of user preference profiles built by analyzing program watching behaviors of the user.

In accordance with an aspect of the present invention, a user interest information-collecting method for a mobile terminal having a digital broadcast receiver includes extracting program guide information from a digital broadcast data received by the digital broadcast receiver; classifying by keyword information items contained in the program guide information; selecting at least one of the information items as user interest fields on the basis of user-viewing history; retrieving relevant information items of the user interest fields; and designating at least one of the retrieved relevant information items selected by the user as a user interest information item.

In accordance with another aspect of the present invention, a user interest information-collecting method for a mobile terminal having a digital broadcast receiver includes receiving digital broadcast data; extracting program guide information from the digital broadcast data; and generating a program guide information database by classifying the information items contained in the program guide information with reference to information object classification keywords.

In accordance with another aspect of the present invention, a user interest information-collecting apparatus for a mobile terminal includes a digital broadcast reception unit for receiving digital broadcast signals; a memory unit for storing an information object classification keyword database; and a control unit for classifying information items contained in a program guide information with reference to keywords provided by the information object classification keyword database and generating a program guide information database with the classified information items.

### BRIEF DESCRIPTION OF THE DRAWINGS

The above and other objects, features and advantages of the present invention will be more apparent from the following detailed description in conjunction with the accompanying drawings, in which:
FIG. 1 is a block diagram illustrating a configuration of a mobile terminal according to an exemplary embodiment of the present invention;
FIGs. 2A to 2F are diagrams illustrating a data structure of a service channel in the DVB-H system;
FIG. 3 is a diagram illustrating a channel format in which service channels are multiplexed in a time slicing scheme for the DVB-H system of FIG. 2;
FIGs. 4A and 4B are block diagrams illustrating a user interest information-collecting method for a mobile terminal according to an exemplary embodiment of the present invention;
FIG. 5 is a flowchart illustrating a relevant information retrieval procedure of the user interest information-collecting method of FIG. 4
FIG. 6 is a screen image illustrating a step of displaying the interest field screen in FIG. 4;
FIG. 7 is a screen image illustrating a step of displaying the relevant information of the selected interest field;
FIG. 8 is a flowchart illustrating the user interest information determination procedure of the user interest information-collecting method of FIG. 4; and
FIG. 9 is a flowchart illustrating the user preference time zone configuration procedure of the user interest information-collecting method of FIG. 4.

### DETAILED DESCRIPTION OF EXEMPLARY EMBODIMENTS

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

The present invention is described herein with respect to a mobile terminal equipped with a DVB-H module.

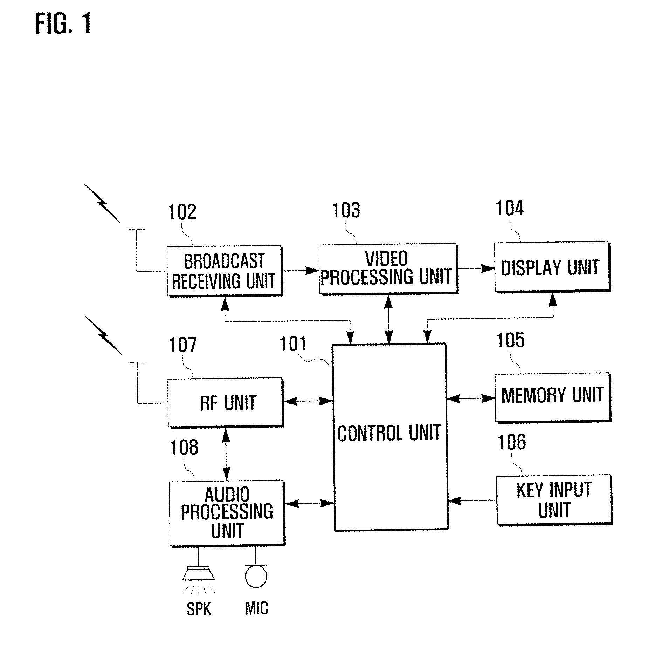

FIG. 1 is a block diagram illustrating a configuration of a mobile terminal according to an exemplary embodiment of the present invention.

Referring to FIG. 1, the mobile terminal includes a control unit 101, a broadcast receiver unit 102, a video processing unit 103, a display unit 104, a memory unit 105, a key input unit 106, a radio frequency (RF) unit 107, and an audio processing unit 108.

The control unit 101 controls general operations of the mobile terminal. The control unit 101 controls cooperative signaling among the broadcast receiver unit 102, video processing unit 103, display unit 104, memory unit 105, key input unit 106, RF unit 107, and audio processing unit 108, and performs data processing and call establishment.

The control unit 101 also classifies the information contained in broadcast program guide information received by the broadcast receiver unit 102 according to previously registered fields. That is, the program-related information contained in the broadcast guide information is classified with reference to the keyword of information object classification table provided with the mobile terminal.

The keywords include program genre (such as action, science fiction, and drama), staring actors/actress, and stage props (such as scene location, jewelry, clothing, electric appliance, and automobiles.

The control unit 101 generates a personalized program guide database with the classified information. The personalized program guide database is provided in the form of a table having fields of genre, stage props, stars, etc.

The control unit 101 analyzes program viewing history of the user and determines user interest fields of the user on the basis of the analysis result. For example, if the user has watched programs in which jewels and cars appear frequently, the control unit 101 registers the genre of the programs and jewels and cars that appeared in the programs as the user interest fields. With reference to the user interest fields, the control unit 101 can collect detailed information on the user interest fields such as models and prices of the car that appeared in the program.

The broadcast receiver unit 102 receives digital broadcast signals, extracts video and audio signals from the digital broadcast signals, and outputs the video and audio signals to the video processing unit 103 and audio processing unit 108. The broadcast receiver unit 102 also receives the program guide information (EPG in DMB system and ESG in DVB system).

The video processing unit 103 is provided with a video decoder for decoding a video signal coded according to video coding standards such as H.264 and Motion Picture Experts Group (MPEG)-4. The video processing unit 103 processes the video signal output by the broadcast receiver unit 102 and user data output from the control unit 101 such that the processed data are displayed on the screen of the display unit 104.

The display unit 104 displays the video data output from the video processing unit 103 and the data broadcast information. The control unit 201 also displays the user interest information by means of the display unit 104.

The user interest information includes the user interest field lists and program viewing history of the user.

The memory unit 105 is configured to store system files required for operating the mobile terminal, large multimedia content files received through the broadcast receiver unit 102, and data broadcast information.

The key input unit 106 is provided with a plurality of alphanumeric keys for inputting call numbers and messages, and various function keys for executing corresponding functions.

The RF unit 107 is responsible for radio communication of the mobile terminal.

The audio processing unit 108 includes an audio codec for processing audio signals including voice. The audio codec can integrate a packet data codec for processing a packet codec. The audio processing unit 108 converts the digital signal output by the RF unit 107 into a digital signal by means of the audio codec so as to be output in the form of audible sound through a speaker (SPK). The audio processing unit 108 also converts the analog signal input through a microphone (MIC) into a digital signal by means of the audio codec and outputs the digital signal to the RF unit 107.

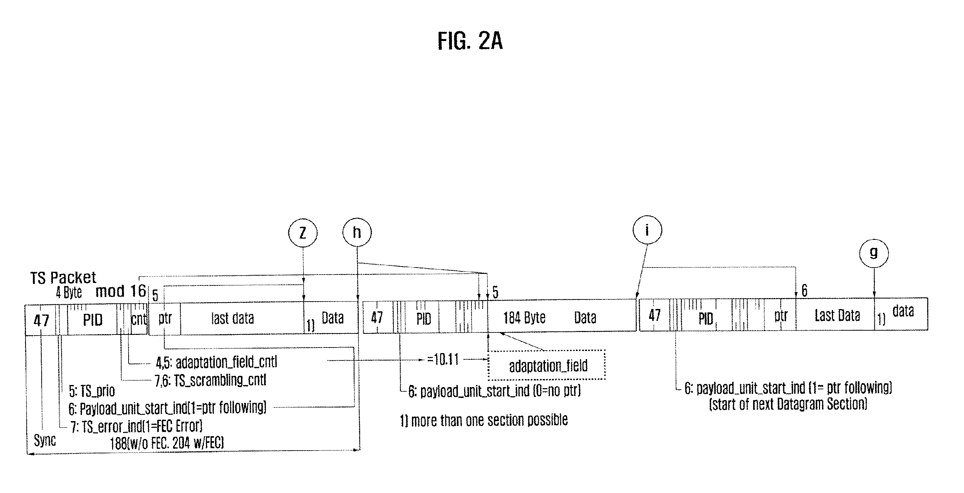

FIGs. 2A to 2F are diagrams illustrating a data structure of a service channel in the DVB-H system.

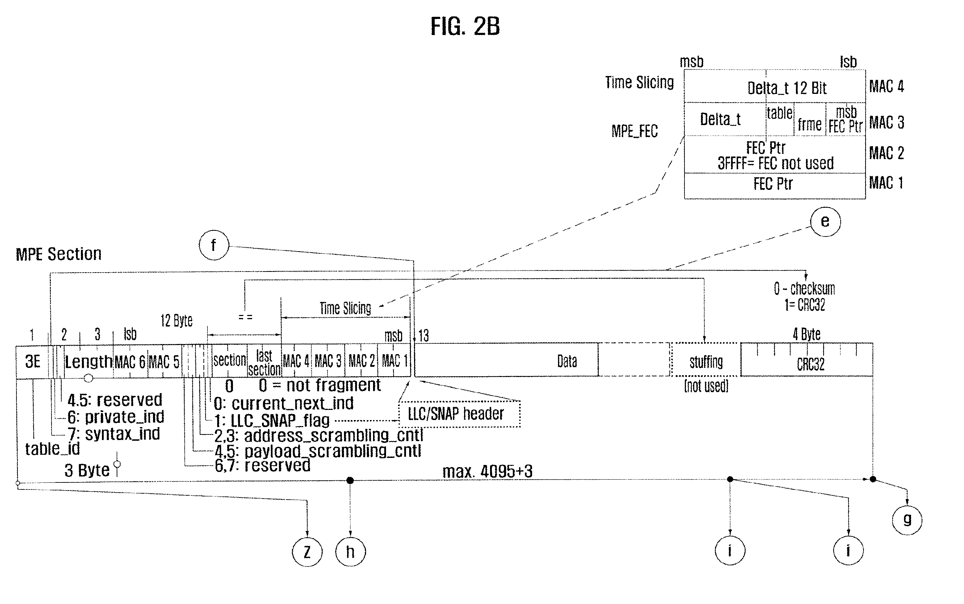

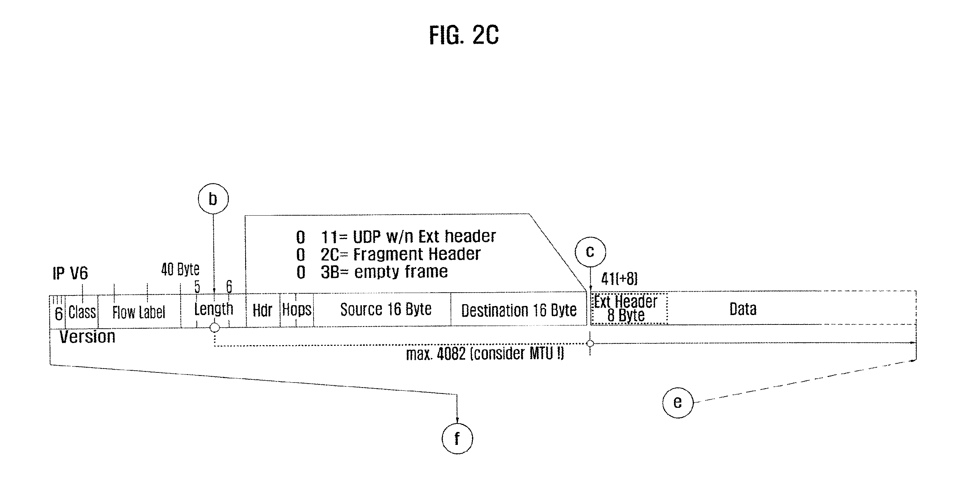

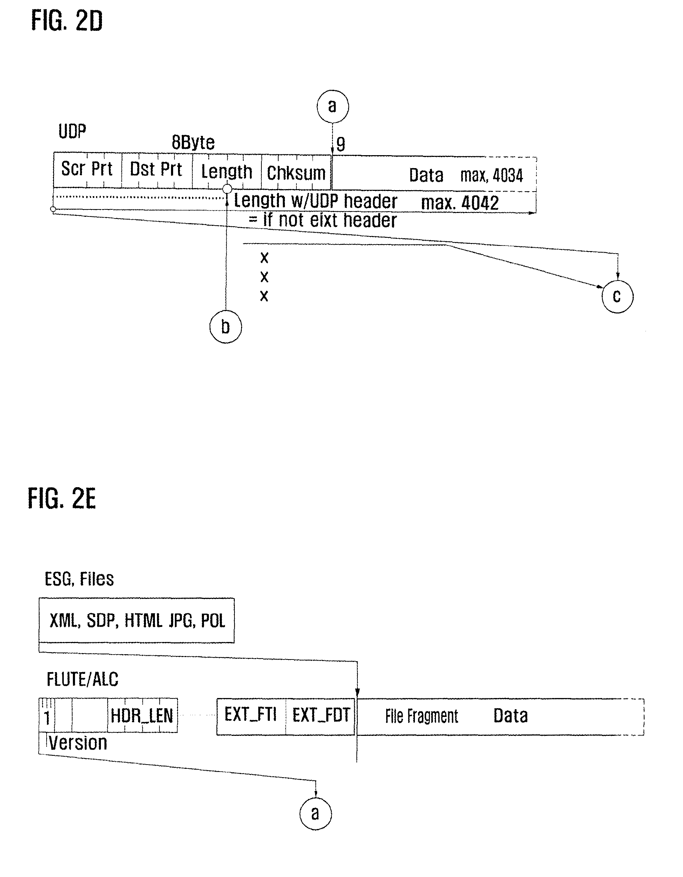

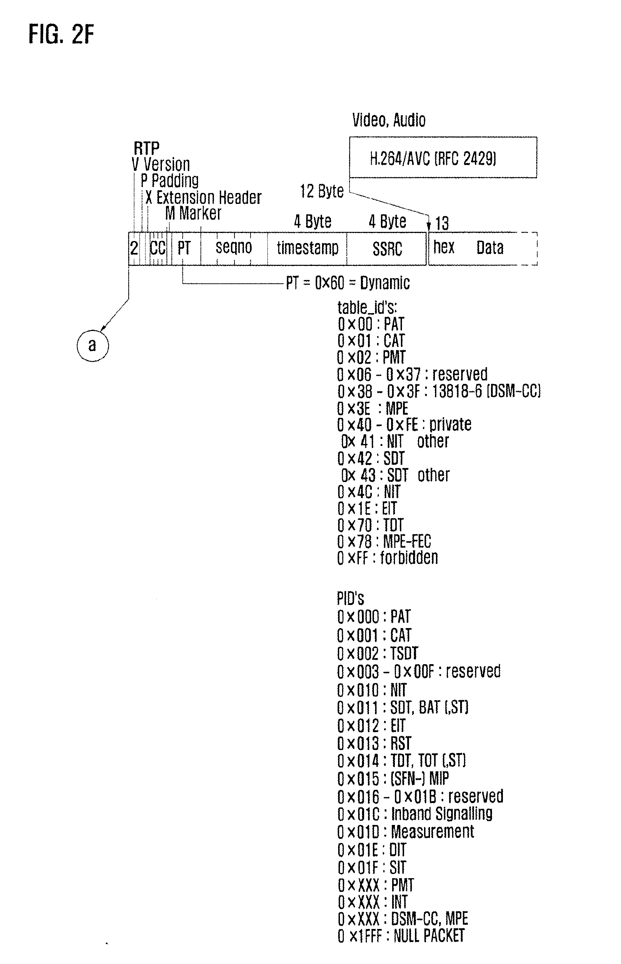

The DVB-H data are structured in the form of MPEG2-TS as shown in FIG. 2A. The total length of each TS packet is 188 bytes consisting of a 4-byte packet header and a 184-byte payload. The packet header includes information on a packet sync and PID. The PID is a channel identifier and can be used for identifying data contained in the payload. The payload consists of Multi Protocol Encapsulation (MPE) sections as shown in FIG. 2B. Each MPE section includes a table IDentifier (table_ID), MPE Forward Error Correction (MPE-FEC) information for correcting errors of the received data, information for slicing the received data in time. Each MPE contains at least one IP datagram. IPv6 datagram is depicted as an example in FIG. 2C. The IP datagram includes an IP version information, source IP address, and destination address. The IP datagram consists of User Datagram Protocol (UDP) units and each UDP unit includes port addresses of the transmitter and receiver (Scr Prt and Dst Prt) as shown in FIG. 2D. The UDP unit contains FLUTE/ALC units and a Real time Transport Protocol (RTP) unit as shown in FIG. 2E. The FLUTE/ALC unit includes the ESG and files and the RTP unit includes audio and video data as shown in FIG. 2F.

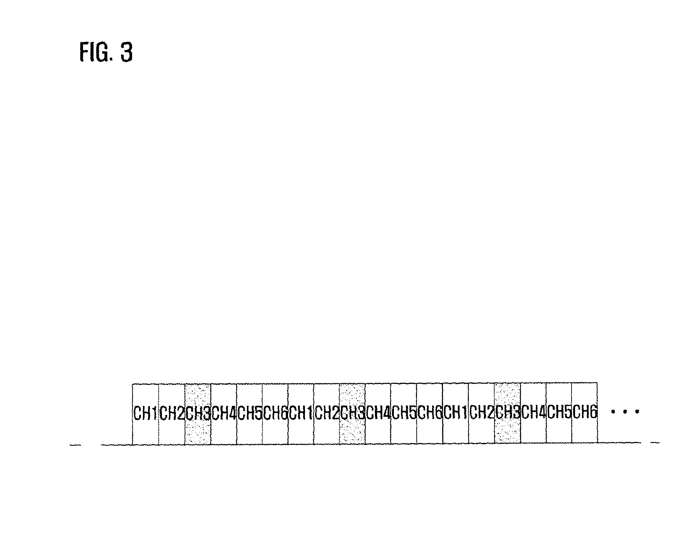

FIG. 3 is a diagram illustrating a channel format in which service channels are multiplexed in a time slicing scheme for the DVB-H system of FIGs. 2A to 2F.

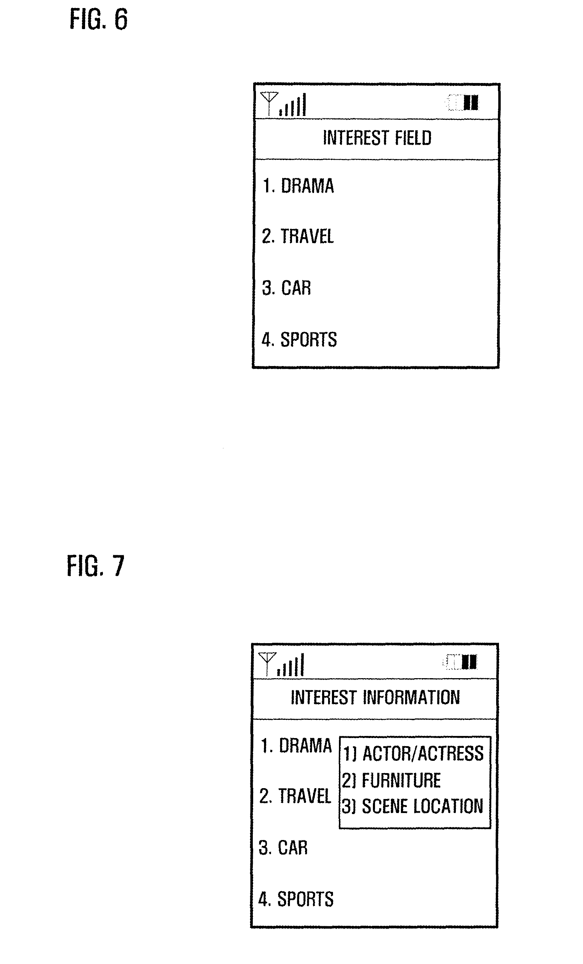

The DVB-H transmitter and receiver turn the power on at timeslots for the current service channel and turn the power off at other timeslots such that it is possible to reduce power consumption. As shown in FIG. 3, 6 service channels are multiplexed in single time duration and channel 3 (CH3) is selected as a current service channel. In this case, the timeslot represented by the channel 3 is a burst-on time and the timeslots represented by channel 1, channel 2, and channel 4 to channel 6 (CH1, CH2, and CH4 to CH6) become burst-off times. The broadcast data of the service channels are transmitted at the respective timeslots for corresponding service channels. When using the time slicing scheme, the digital broadcast receiver can predict the burst time of the current service channel and the burst times of other service channels. For example, if the burst time of each channel is 1 second, the broadcast data of the current service channel is received every 6 seconds. Since the digital broadcast receiver also knows the transmission order of service channels, it is possible to receive the broadcast data at the timeslot assigned for the current service channel.

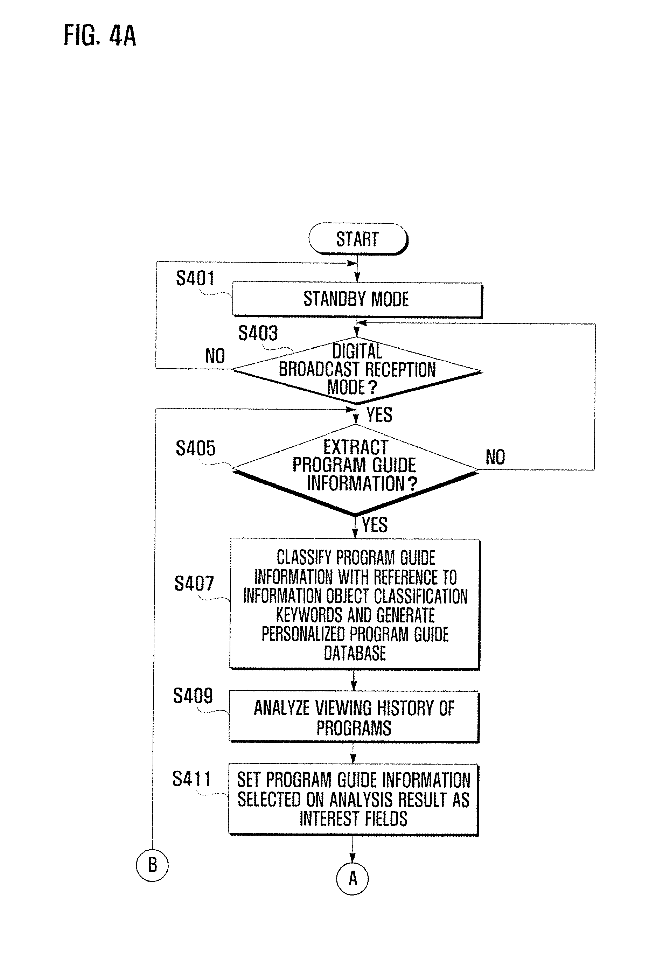

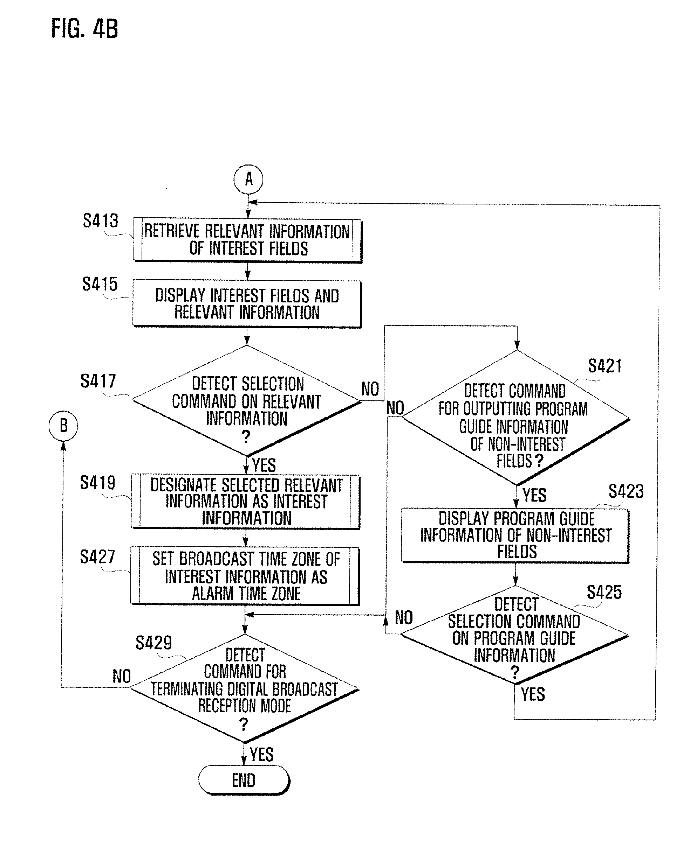

FIGs. 4A and 4B are block diagrams illustrating a user interest information-collecting method for a mobile terminal according to an exemplary embodiment of the present invention.

Referring to FIG. 4A, if the power is switched on, the mobile terminal starts operating in a standby mode in step S401. In this embodiment, the mobile terminal is provided with both the wireless communication function and digital broadcast reception function such that the mobile terminal may access to a mobile communication network at step S401.

While operating in the standby mode, the control unit 101 of the mobile terminal determines if a broadcast reception mode is activated in step S403. In the broadcast reception mode, the broadcast receiver unit 102 receives the digital broadcast signal and program guide (ESG). The ESG is periodically transmitted with the digital broadcast signal.

If it is determined that the broadcast reception mode is activated, the control unit determines if program guide extraction is requested in step S405. If a program guide extraction is requested, the control unit 101 extracts program guide information from the digital broadcast signal. In this embodiment, the program guide information includes programs per channel, program abstracts, program titles, and program items. For example, the program guide information includes information on the program genre (such as action, science fiction, drama, etc.), starring actor/actress, stage props (such as scene location, jewelry, clothing, electric appliance, and cars.

Next, the control unit 101 classifies the program guide information with reference to the keywords registered to the information object classification table stored in the storage unit 105 and generates a personalized program guide database in step S407. The personalized program guide database is stored within the memory unit 105.

During the program information classification process, the control unit 101 classifies the program titles and items according to the keywords of the information object classification table and then generates a database with the classified programs and program items (i.e., a personalized program guide database).

The keywords of the information object classification table are previously stored in the memory unit 105 in the form of a database. In this embodiment, the mobile terminal can receive the information object classification table from an information object classification database server connected to the mobile communication network for updating the keywords stored within the memory unit 105.

In a case of a specific genre program composed of specific landscapes and props (cars and furniture of specific brands), the program guide information is provided with various information such as the program title, genre of the program, starring actor and actress, and brands of props, and the control unit 101 compares the program guide information to the information object classification keyword database and adds the program title and items that appeared only in the program guide information to the information object classification keyword database.

Next, the control unit 101 analyzes the program viewing history of the user in step S409. For example, the control unit 101 checks the programs viewed by the user, program-viewing time, and program-viewing frequency.

In the cases of programs scheduled weekly or at a specific time zone, programs produced with specific landscape or containing specific props, specific sports programs, or programs in which specific actor/ actress appears, the program guide information provides various detailed information on the genre, characters, stage props, and names of items such that the control unit 101 can check and analyze programs the user watched and items that appeared in the programs. The program viewing history is stored within the memory unit 105.

Next, the control unit 101 generates a user interest field database that is personalized with user interest fields selected on the basis of the viewing history analysis result in step S411.

The user interest fields are chosen on the basis of viewing time and frequencies on the programs. That is, the programs of which viewing time and viewing frequency greater than a predetermined threshold time and frequency and the items appeared in such programs are selected as the user interest fields. The user interest fields can be sorted in an order of priorities determined on the basis of the viewing time and frequency in the user interest information database. In this embodiment, the programs, services, and items exposed to the user more than 3 hours or 3 times in 15-day duration are selected as the user interest field.

In FIG. 4B, after generating the user interest field database, the control unit 101 retrieves the relevant information of the respective user interest fields in step S413. For example, a specific drama is selected as a user interest field, the control retrieves information on the actors/actresses, props, and scene locations of the drama.

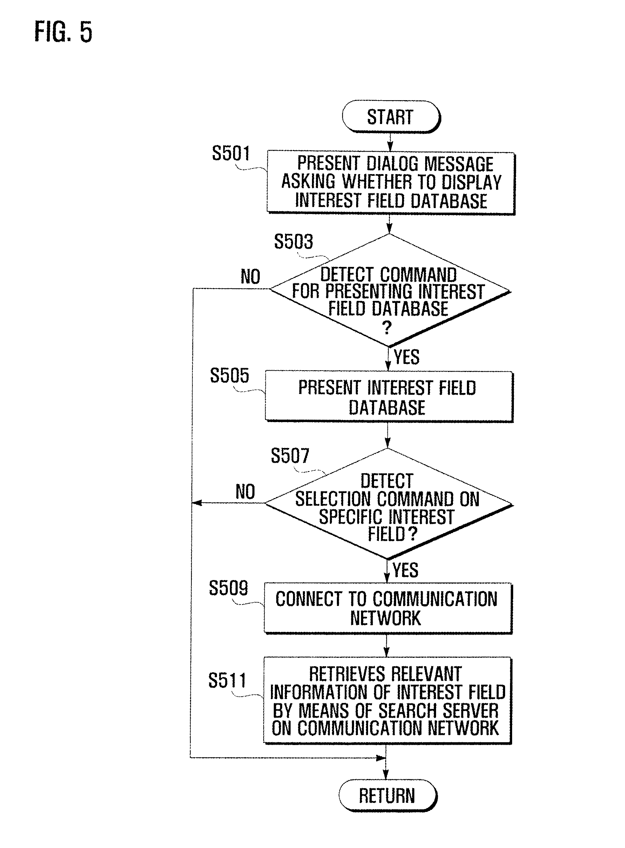

FIG. 5 is a flowchart illustrating a relevant information retrieval procedure of step S413 of the user interest information-collecting method of FIG. 4B.

Referring to FIG. 5, the control unit 101 displays a dialog message asking whether the user wants to display the interest field database in step S501 and determines if a command for requesting an interest field database is input in step S503. If an interest field database request command is input, the control unit 101 displays the interest field database on the screen of the display unit 104 in step S505.

Next, the control unit 101 determines whether a selection command is input for selecting an interest field from the interest field database in step S507. If an interest field selection command is input, the control unit 101 establishes a connection channel to a search server via a communication network by means of the RF unit 107 in step S509. The communication network can be composed of wireless and wired network including wired and wireless Internet. After establishing the connection channel to the search server, the control unit 101 retrieves relevant information of the user interest field from the search server in step S511.

The control unit 101 also retrieves the relevant information of the user interest field by means of a search server installed within the memory unit 105 rather than the search server of the network.

Returning to FIG. 4B, the relevant information retrieved through the relevant information retrieval procedure in step S413, the control unit 101 displays the interest fields and, if an interest field is selected, the retrieved relevant information of the selected interest field on the screen in step S415. At this time, the control unit 101 displays the user interest field database listing the user interest fields in an order of priorities, and presents, if a specific interest field is selected from the user interest field database, the relevant information of the selected interest field.

FIG. 6 is a screen image illustrating a step of displaying the interest fields screen presented at step S415, and FIG. 7 is a screen image illustrating a step of displaying the relevant information of the selected interest field.

As shown in FIGs. 6 and 7, if the interest field "drama" is selected, "actor/actress", "scene location", and "furniture brand" are presented as the relevant information.

While displaying the relevant information, the control unit 101 determines if a selection command is input for selecting one of the relevant information items in step S417. If a relevant information selection command is input, the control unit 101 determines the selected relevant information as the user interest information in step S419).

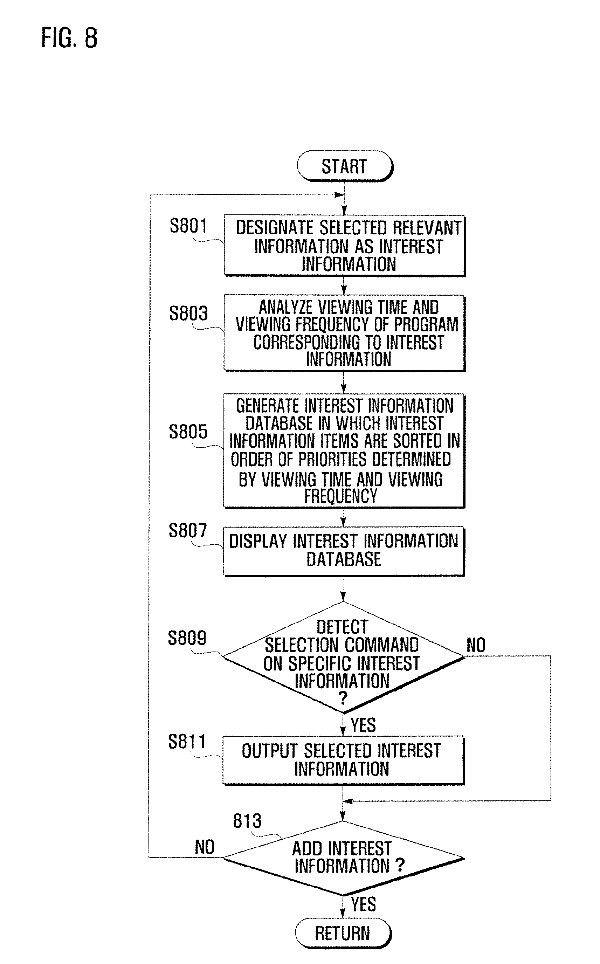

FIG. 8 is a flowchart illustrating the user interest information determination procedure in step S419 of the user interest information-collecting method of FIG. 4B.

Referring to FIG. 8, if the relevant information selection command is input, the control unit 101 determines the selected relevant information as the user interest information in step S801, retrieves information on the viewing time and frequency of the program corresponding to the user interest information in step S803, generates a user interest information database in which the user interest information items are listed in an order of priorities that are determined on the basis of the viewing time and frequencies on the screen in step S805, and displays the user interest information database on the screen in step S807. The user interest information database can be presented in a Picture-In-Picture (PIP) format or a scroll ticker format provided at the bottom of the screen.

If an execution command is input on one of the user interest information items from the database in step S809, the control unit 101 outputs a content (detailed information) corresponding to the user information item.

For example, in a case that props, actors, homepage, and scene locations in a movie program are selected as user interest information, and one of the user interest information items is selected in step S809, detailed information on the selected item (for example, the scene locations) is displayed on the screen S811. Sequentially, if an addition command is input S813, the control unit 101 repeats steps S801 to S813. In this manner, the control unit 101 can configure the user interest fields and information. If no addition command is input, the user interest information determination procedure ends.

At step S417 of FIG. 4B, if a relevant information selection command is not input, the control unit 101 determines if a command for requesting non-interest field information is input in step S421. This allows the user the opportunity to focus on other programs.

If a command for requesting non-interest field information is input, the control unit 101 displays the program guide information database in response to the request command in step S423. The program guide information database is generated at step S407 and stored within the memory unit 105.

If another program guide information request command is not input, the control unit 101 determines if a broadcast reception mode termination command is input in step S429 and ends the broadcast reception mode in response to the broadcast reception mode termination command.

After displaying the program guide information database at step S423, the control unit determines whether a selection command is input on a specific program guide information item of the program guide information database in step S425. If the selection command is input, the control unit 101 performs the relevant information retrieval procedure in step S413 and, otherwise, the control unit 101 determines if a broadcast reception mode termination command is input in step S429 and ends the broadcast reception mode in response to the broadcast reception mode termination command.

After determining that the user interest information at step S419, the control unit 101 sets the broadcast time zones of the programs corresponding to the user interest information determined at step S419 as user preference time zones in step S427.

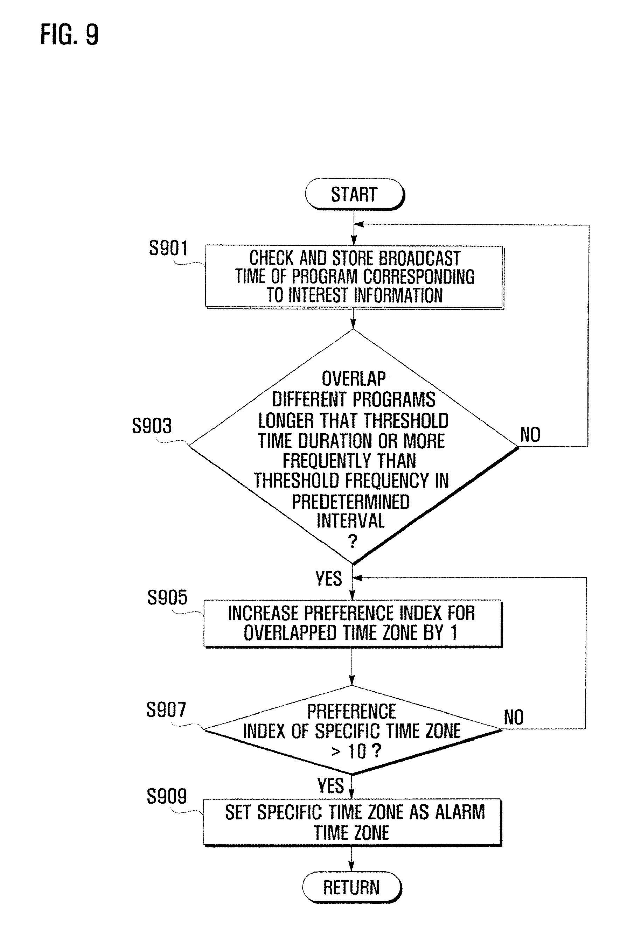

FIG. 9 is a flowchart illustrating the user preference time zone configuration procedure in step S427 of the user interest information-collecting method of FIG. 4B.

Referring to FIG. 9, the control unit 101 analyzes user preference time zones corresponding to the user interest information items determined at step S419 and stores information on the user preference time zones into the memory unit 105 in step S901. Next, the control unit 101 determines if the broadcast zones of different user interest information items overlap with a predetermined threshold time duration or predetermined threshold frequency in a predetermined time interval in step S903. If the user preference time zones overlapped with a threshold time duration or threshold frequency, the control unit 101 increases a preference index of the user preference time zone by 1 in step S905.

In this embodiment, the threshold time is 20 minutes and the threshold frequency is 3 times in 10 minutes, and the preference time zone is set to 10 minutes. For example, if the broadcast time of user interest information A is PM 8:25 to PM 8:45 and the broadcast time of user interest information B is PM 8:20 to PM 8:30, the preference index increases by 1.

In addition to the user interest information A and B, if the broadcast time of user interest information C is PM 8:25 to PM 8:30 and the broadcast time of user interest information D is PM 8:30 to PM 8:35, the broadcast times of the user preference information A, B, C, and D overlap during the 10 minutes between PM 8:25 and PM 8:35 such that the preference index of time zone PM 8:20 to PM 8:30 increases by 1. Accordingly, total preference index of the time zone PM 8:20 to PM 8:30 becomes 2.

The user preference index is periodically updated and can be changed by the user when a program series finishes.

The control unit 101 determines if there is a time zone of which preference index is greater than 10 in step S907. If there is a time zone of which preference index is greater than 10, the control unit 101 sets the time zone of which preference index is greater than 10 as a preference time zone in step S909. At this time, the control unit 101 stores the information on the preference time zone and sets an alarm at a start time (PM 8:20, in the above example). Also, the alarm can be set for the start time of a first beginning program (PM 8:25, user preference information A in the above example). The alarm can be set at a time before the beginning of the program (for example, 1 minute before the start time).

Returning again to FIG> 4B, after completing the user preference time zone configuration procedure S427, the control unit 101 determines if a broadcast reception mode termination command is input in step S429 and ends the broadcast reception mode in response to the broadcast reception mode termination command. Until the broadcast reception mode termination command is input, the control unit 101 repeats steps S405 to S429.

As described above, the user interest information-collecting method of the present invention classifies the program guide information received in a digital broadcast reception mode according to broadcast viewing history and information object classification keywords, thereby improving utilization of the program guide information and facilitating to personalize user interest fields and information associated with the broadcast programs.

Although exemplary embodiments of the present invention have been described in detail hereinabove, it should be clearly understood that many variations and/or modifications of the basic inventive concepts herein taught which may appear to those skilled in the present art will still fall within the spirit and scope of the present invention, as defined in the appended claims.

## Claims

1. A user interest information-collecting method for a mobile terminal having a digital broadcast receiver, comprising the steps of:
extracting program guide information from a digital broadcast data received by the digital broadcast receiver;
classifying by keyword information items contained in the program guide information;
selecting at least one of the information items as user interest fields on the basis of user-viewing history;
retrieving relevant information items of the user interest fields; and
designating at least one of the retrieved relevant information items selected by the user as user interest information item.

2. The user interest information-collecting method of claim 1, further comprising:
determining time zones in which programs associated with the user interest information are broadcast as user preference time zones; and
setting alarms for the user preference time zones.

3. The user interest information-collecting method of claim 1, wherein the program guide information comprises at least one of service channel name and program title.

4. The user interest information-collecting method of claim 1, wherein classifying information items comprises:
grouping the information items by service channel name and program titles with reference to predetermined information object classification keywords; and
generating a service channel and program title database with the grouped information items.

5. The user interest information-collecting method of claim 1, wherein designating at least one of the retrieved relevant information items comprises:
analyzing viewing history of programs corresponding to the user interest fields;
selecting service channel names and program titles associated with the programs of which an index, determined by the viewing history, is greater than a predetermined value, as user interest fields; and
generating a user interest field database with the user interest fields, that are sorted by priority, determined on the basis of at least one of viewing time and viewing frequency.

6. The user interest information-collecting method of claim 1, wherein retrieving relevant information items comprises:
querying whether to output a user interest field database;
determining, if a user interest field database is output by user request, if a command for retrieving relevant information of a specific user interest field is input; and
retrieving, if a retrieval command is input, the relevant information via a communication network.

7. The user interest information-collecting method of claim 1, wherein designating at least one of retrieved relevant information items as user interest information item comprises:
outputting relevant information items in an order of priorities that are determined on the basis of viewing time and viewing frequency to the user interest fields;
generating a user interest information database with the user interest information selected from the relevant information items; and
outputting the user interest information database in which the user interest information items are sorted in an order of priorities that are determined on the basis of at least one of viewing time and viewing frequency of the programs corresponding to the user interest fields.

8. A user interest information-collecting method for a mobile terminal having a digital broadcast receiver, comprising:
receiving digital broadcast data;
extracting program guide information from the digital broadcast data; and
generating a program guide information database by classifying the information items contained in the program guide information with reference to information object classification keywords.

9. The user interest information-collecting method of claim 8, wherein the program guide information comprises at least one of service channel name and program title.

10. The user interest information-collecting method of claim 8, wherein generating a program guide information database comprises:
classifying service channel names and program titles of information items contained in the program guide information with reference to information object classification keywords; and
generating a service channel and program database with the classified service channel names and program titles.

11. The user interest information-collecting method of claim 8, further comprising:
analyzing viewing history of programs corresponding to the classified information items;
selecting at least one of the programs of which an index, determined by the viewing history, is greater than a predetermined value, as user interest fields;
retrieving relevant information of the selected user interest fields;
outputting relevant information items of the user interest fields; and
displaying relevant information a specific user interest field in response to a selection command input on a relevant information item.

12. The user interest information-collecting method of claim 11, further comprising:
determining time zones in which programs associated with user interest information are broadcast as user preference time zones; and
setting alarms for the user preference time zones.

13. The user interest information-collecting method of claim 11, wherein selecting at least one of the programs as a user interest field comprises:
selecting, if a program is viewed greater than a predetermined time or greater than a predetermined number of times, the service channel name and program title of the program as user interest fields; and
generating a user interest field database in which the user interest fields are sorted in an order of priorities that are determined based on at least one of a viewing time and a viewing frequency.

14. The user interest information-collecting method of claim 11, wherein retrieving relevant information of the selected user interest fields comprises:
establishing a connection to a communication network; and
searching the communication network for information relevant to the broadcast service and program of the user interest fields on.

15. The user interest information-collecting method of claim 11, wherein relevant information items are output in an order of priorities that are determined on the basis of one of viewing time and viewing frequency of programs corresponding to the relevant information items.

16. The user interest information-collecting method of claim 11, wherein selecting at least one of the programs as user interest fields comprises:
determining if a selection command is input on a specific relevant information item;
generating, if a selection command is input, a user interest information database with the selected relevant information; and
outputting the user interest information database in which user interest information items are sorted in an order of priorities that are determined on the basis of one of viewing time and viewing frequency.

17. A user interest information-collecting apparatus for a mobile terminal, comprising:
a digital broadcast reception unit for receiving digital broadcast signals;
a memory unit for storing an information object classification keyword database; and
a control unit for classifying information items contained in a program guide information with reference to keywords provided by the information object classification keyword database and generating a program guide information database with the classified information items.

18. The user interest information-collecting apparatus of claim 17, wherein the information object classification keyword database is downloaded from a keyword server connected to a communication network.

19. The user interest information-collecting apparatus of claim 17, wherein the control unit analyzes viewing histories on programs corresponding to the information items and selects information items of the programs satisfying a viewing condition as user interest fields.

20. The user interest information-collecting apparatus of claim 19, wherein the control unit retrieves relevant information of the user interest fields by means of a search engine installed within the memory unit and sets the relevant information as the user interest information.

21. The user interest information-collecting apparatus of claim 19, wherein the control unit retrieves relevant information of the user interest fields by means of a search server connected through a communication network and sets the relevant information as the user interest information.
